## Europäisches Patentamt

## European Patent Office

## Office européen des brevets

(19)

(11) Veröffentlichungsnummer: **0 224 719**
**B1**

(12) **EUROPÄISCHE PATENTSCHRIFT**

(45) Veröffentlichungstag der Patentschrift:
**11.01.89**

(21) Anmeldenummer: **86115015.9**

(22) Anmeldetag: **29.10.86**

(51) Int. Cl.⁴: **F41H 11/16**

(54) **Verfahren zur Neutralisation von oberflächenmässig verlegten oder getarnten Landminen und mobiles Gerät für die Durchführung des Verfahrens.**

(30) Priorität: **04.12.85 DE 3542787**

(43) Veröffentlichungstag der Anmeldung:
**10.06.87 Patentblatt 87/24**

(45) Bekanntmachung des Hinweises auf die Patenterteilung:
**11.01.89 Patentblatt 89/2**

(84) Benannte Vertragsstaaten:
**BE DE ES FR GB GR IT LU NL**

(56) Entgegenhaltungen:
**DE-A- 2 121 089**
**DE-A- 3 335 464**
**FR-A- 2 415 792**
**US-A- 3 837 259**

**REVUE INTERNATIONALE DE DEFENSE, Band 10, Nr. 3,**
**Juni 1977, Seiten 523-525, Genève, CH; J. KITCHING:**
**"Neutralisation des champs de mines"**
**REVUE INTERNATIONALE DE DEFENSE, Band 18,**
**Nr. 6, 1985, Seite 928, Cointrin-Genève, CH; "Robot de**
**déminage"**
**WEHRTECHNIK, Band 17, Nr. 12, Dezember 1985,**
**Seiten 77-80, Bonn, DE; E. HECKMANN: "Flugabwehr**
**durch Hochenergielaser"**

(73) Patentinhaber: **Jastram-Werke GmbH KG, Billwerder**
**Billdeich 603, D-2050 Hamburg 80(DE)**

(72) Erfinder: **Hoogen, Norbert, Dr.-Ing., Stormarnring 38,**
**D-2056 Glinde(DE)**
Erfinder: **Tischer, Heinz, Dr.-Ing., Billeweg 51a,**
**D-2057 Wentorf(DE)**

(74) Vertreter: **Patentanwälte Dipl.-Ing. J. Richter Dipl.-Ing. F.**
**Werdermann, Neuer Wall 10, D-2000 Hamburg 36(DE)**

# Beschreibung

Die Erfindung betrifft ein Verfahren zur Neutralisation von oberflächenmäßig im Erdreich verlegten oder getarnten Landminen mittels eines über die von Landminen zu räumende Fläche zur Schaffung einer minenfreien Gasse geführten Strahles und ein mobiles Gerät für die Durchführung des Verfahrens.

Die Landmine ist ein akives Hindernis, um gegnerische Bewegung aufzuhalten, zu verzögern oder unmöglich zu machen. Sie wird auch in Zukunft immer ein wichtiges Element der Kampfunterstützung sein. Durch den Einsatz von Elektronik ist nicht nur die Zuverlässigkeit, sondern auch die Wirksamkeit der Minen verbessert worden.

Bekannt sind verschiedene Arten von mechanischen Minenräumsystemen, wie Minenpflüge und/oder Minenwalzen, wobei auch explosive Minenräumsysteme bekannt sind. Traditionelle Systeme, wie z.B. Sprengladungen, Sprengschnüre und -teppiche werden zunehmend ergänzt und teilweise sogar ersetzt durch Kraftstoff-Luft-Explosivsysteme (FAE-Systeme). Letztere können bereits über 90% aller bekannten Minen mit Druckzünder neutralisieren. Jedoch sind auch FAEresistente Minen bekannt.

Moderne Minen sind weitaus schwieriger zu räumen, als dies bei den derzeit benutzten Minen mit Druckzündern der Fall ist. Eine intergrierte Aufnahmesperre, die im Bedarfsfall auch abschaltbar ist, verhindert ein einfaches Räumen. Seismische Sensoren schließen das Aufnehmen der Minen von Hand aus. Ein zur Räumung künstlich erzeugtes elektromagnetisches Feld bleibt ohne Wirkung, wenn vorher nicht der richtige Wecksensor angesprochen worden ist. Auch pyrotechnische Räummittel haben gegen moderne Minen kaum noch eine Wirkung, da diese eine hohe Widerstandsfähigkeit gegen An- und Übersprengen haben. Solche plötzlichen und kräftigen Lageveränderungen, wie sie detonierender Sprengstoff erzeugt, werden von einer bei Landminen eingebauten Schocksperre aufgefangen und die Detonation wird dadurch verhindert. Mechanische Räummittel, wie Roller und Schlagketten, wirken dagegen nur gegen Drucksensoren und können Minen mit Sensorenkombinationen allenfalls zerstören, wobei jedoch eine hohe Risikorate bestehen bleibt. Diese Räummittel sind aber nicht nur sehr langsam und schwerfällig, sondern nach einer bestimmten Anzahl von Minendetonationen auch verschlissen. Die wirkungsvollste Räummethode besteht in der Entfernung des verminten Erdreiches in der gesamten Fahrzeugbreite, jedoch ist hierzu ein hoher technischer Aufwand erforderlich. Bei dieser Räumethode werden Erde und Minen nach vorn und seitwärts geschleudert und somit absolut minenfreie Gassen geschaffen. Die Räumgeschwindigkeit bei dieser Räummethode ist jedoch nicht sehr hoch.

Zu den sichersten, aber auch besonders gefährlichen und zeitaufwendigen Räummethoden gehört die Verwendung einzelner Schlagladungen, die von Hand direkt auf oder an die Mine gelegt werden. Diese Räumtechnik ist jedoch für das rasche Überwinden von Minensperren gänzlich ungeeignet.

Moderne, sogenannte intelligente Landminen zeichnen sich u.a. dadurch aus, daß diese mit herkömmlichen Mitteln nicht aufgefunden bzw. beseitigt werden können. Diese Art von Landminen besteht aus sehr schwer detektierbaren Materialien, wie z.B. Nichtmetallen, Kunststoffen od. dgl., und werden unter Umständen zur Tarnung mit ortsüblichen Stoffen überdeckt, u.a. auch mit Pflanzenteilen, Erdmaterial u. dgl. Die zunehmende "Intelligenz" der Landminen, z.B. ermöglicht durch den Einsatz von Mikroelektronik im Bereich des Zündmechanismus, führt dazu, daß traditionelle Mittel bei der Minenräumung versagen. Auch durch ein flächendeckendes Ansprengen mit Hilfe von Sprengschnüren, Sprengteppichen oder Kraftstoff-Luft-Explosionssystemen lassen sich intelligente Landminen nicht immer sicher beseitigen.

Eine konventionelle Problemlösung könnte darin bestehen, daß mit üblicher Geschoßmunition durch systematisches flächendeckendes Beschießen jede vorhandene Landmine getroffen und durch Zünden des Zündmechanismus zur Detonation gebracht wird. Aus logistischen und auch aus Kostengründen ist eine derartige Methode jedoch undurchführbar.

Durch die DE-A 3 335 464 ist ein Minenräumfahrzeug gemäß Oberbegriff des Anspruches 1 zum Räumen von Landminen mit an einem gepanzerten Fahrzeug angeordneten Greifwerkzeugen zum Erfassen und Beseitigen der Landminen aus dem Räumbereich des Fahrzeuges bekannt. Die Greifwerkzeuge bestehen dabei aus einem Flüssigkeitsstrahl, vorzugsweise aus einem Wasserstrahl. Das Räumen von Landminen mittels eines derartigen Flüssigkeitsstrahls als Greifwerkzeug erfolgt dabei in der Weise, daß mit nebeneinander, nach Art der Zinken eines Rechens angeordneten Flüssigkeitsstrahldüsen der zu räumende Bodenbereich in kämmender Weise beaufschlagt wird, wobei die Flüssigkeitsstrahldüsen ständig so geschwenkt werden, daß ein zunächst senkrecht in den Boden eindringender Flüssigkeitsstrahl nach vorne geführt wird, worauf nach einem Schwenkwinkel von weniger als 90° der Flüssigkeitsstrahl abgestellt wird und die Flüssigkeitsstrahldüse wieder senkrecht zum Boden geschwenkt wird, um den boden wieder erneut mit einem nach vorn wandernden Flüssigkeitsstrahl zu durchschneiden.

Ein derartiges Minenräumsystem setzt das Vorhandensein einer ausreichenden Menge einer Flüssigkeit, z.B. Wasser, voraus. Das Minenräumfahrzeug muß daher mit einem Vorratsbehälter zur Aufnahme der Flüssigkeit ausgerüstet sein oder muß zumindest ein zusätzliches Fahrzeug hinter sich herziehen, welches einen ausreichenden Flüssigkeitsvorrat mit sich führt. Diese zusätzlichen Einrichtungen machen das Minenräumfahrzeug schwerfällig; das Räumen von Minen wird dadurch unwirtschaftlich und umständlich. Hinzu kommt, daß der Flüssigkeitsverbrauch sehr groß ist, um wirksam im Erdreich verlegte Bodenminen zu bekämpfen. Dies setzt voraus, daß das Minenräumfahrzeug die Möglichkeit haben muß, Flüssigkeit nachzutanken bzw. vorhandene Vorratsbehälter mit Wasser erneut aufzufüllen. Befinden sich im Wirkungsbereich des Minenräumfahrzeuges keine Wasserstellen, dann ist ein Nachtanken nicht möglich. Eine Minenräumung z.B. in wasserlosen Gegenden ist mit einem derartigen Minenräumfahrzeug kaum möglich, denn Operationsausgangspunkt derartiger Minenräumfahrzeuge ist oftmals eine in großer Entfernung liegende Basisstellung, zu der dann ein derartiges Minenräumfahrzeug zurückkehren muß, um Wasser nachtanken zu können. Hinzu kommt, daß das Operieren in wasserlosen Gegenden schon dadurch mit Schwierigkeiten verbunden ist, daß aufgrund von Wassermangel die für das Räumen von Minen mit einem Wasserstrahl erforderlichen Wassermengen gar nicht zur Verfügung stehen und auch nicht herantransportiert werden können. Der Einsatzbereich eines mit einem Flüssigkeitsstrahl arbeitenden Minenräumfahrzeuges ist hiernach sehr begrenzt.

Hinzu kommt, daß eine wirksame Minenbekämpfung nur dann möglich ist, wenn der Flüssigkeitsstrahl zunächst senkrecht in den Boden zum Eindringen gebracht wird und dann daraufhin durch entsprechende Schwenkbewegung nach vorn über das verminte Feld geführt wird. Trifft bereits ein senkrecht in den Boden eindringender Flüssigkeitsstrahl auf eine Bodenmine und wird diese zur Detonation gebracht, dann werden die Greifwerkzeuge, die mit den Flüssigkeitsstrahldüsen versehen sind, zerstört oder beschädigt. Zur Vermeidung einer Beschädigung der Greifwerkzeuge durch detonierende Minen ist bei diesem Minenräumfahrzeug zwischen den Flüssigkeitsstrahldüsen und der Fahrzeugfront noch ein zusätzliches gepanzertes Schild angeordnet, wodurch das Fahrzeuggewicht wesentlich erhöht wird.

Das Räumen von Minen mit einem Flüssigkeitsstrahl ist nicht wirksam durchführbar. Bereits durch Schotter oder eine Vielzahl von kleinen Steinen wird der auf das Erdreich gerichtete Flüssigkeitsstrahl abgelenkt und aufgefächert, so daß der Flüssigkeitsstrahl keine ausreichende Wirksamkeit mehr hat, denn der Flüssigkeitstrahl wirkt nur, wenn dieser fokussiert und mit hohem Druck ausgesandt wird. Des weiteren wird durch den Einsatz eines Flüssigkeitsstrahles das Erdreich aufgewühlt; dabei können Minen freigelegt oder auch durch das aufgewühlte Erdreich noch zusätzlich abgedeckt werden, so daß durch zusätzliche Erdreichanhäufung im Boden verlegte Minen noch zusätzlich mit einer Erdschicht abgedeckt werden, wodurch ein Erfassen und eine Neutralisation der Minen erschwert wird. Außerdem kommt noch hinzu, daß ein Füssigkeitsstrahl nur auf geringer Entfernung aktiv einsetzbar ist, denn auf größerer Entfernung wird der Flüssigkeitsstrahl aufgefächert und hat somit keine ausreichende Druckwirkung mehr, um im Erdreich vergrabene Bodenminen zu erfassen und zur Detonation zu bringen.

Nach der DE-A 2 121 089 ist ein Gerät zum Räumen von Landminen unter Verwendung eines oder mehrerer Strahltriebwerke bzw. Strahldüsen zur unmittelbaren oder mittelbaren Vernichtung oder Beseitigung von Minen bekannt. Bei diesem Gerät wird ein heißer Gasstrahl eingesetzt, durch den der Boden erodiert und die ausgelegten Minen durch den Gasdruck und die dabei entstehenden hohen Temperaturen zerstört bzw. unbrauchbar gemacht oder zur Detonation gebracht oder zur Seite geschleudert werden sollen, um eine minenfreie Gasse durch das Minenfeld zu schaffen. Der Einsatzbereich eines mit einem heißen Gasstrahl arbeitenden Minenräumgerätes ist jedoch sehr beschränkt, denn es sind Bodenminen-Generationen bekannt, die weder auf Temperaturen noch auf Druck reagieren. Offenbar ist jedoch das Räumen von Minen mit einem heißen Gasstrahl nicht so wirkungsvoll, denn die intermittierend arbeitenden Strahltriebwerke bzw. Strahldüsen werden zur selbständigen Fortbewegung eines Springhammers eingesetzt, durch dessen Eigengewicht der Boden abgeklopft wird, um Minen zur Detonation zu bringen. Da auch die Strahltriebwerke, um wirksam mit dem Gasstrahl arbeiten zu können, in geringem Abstand über der Erdoberfläche geführt werden, besteht die Gefahr einer Beschädigung der Strahltriebwerke bei einer plötzlichen Detonation einer aufgespürten Mine. Aus diesem Grunde sind an dem Minenräumfahrzeug weitere zusätzliche Einrichtungen vorgesehen, vermittels der die Strahltriebwerke vor dem Räumfahrzeug angeordnet sind, wodurch das Eigengewicht des Fahrzeuges wesentlich erhöht wird.

Minenräumgeräte, die mit einem Flüssigkeitsstrahl oder einem Gasstrahl arbeiten, sind in ihrem Wirkungsbereich beschränkt, und zwar sind nur solche im Erdreich verlegte Minen erfaßbar, die auf Druck oder Temperatur reagieren. Sogenannte intelligente Minen zeichnen sich nämlich dadurch aus, daß diese mit herkömmlichen Mitteln nicht aufgefunden bzw. beseitigt werden können und deren Zündmechanismus so ausgebildet ist, daß sie auf konventionelle Mittel nicht ansprechen.

Nach der FR-A 2 415 792 ist der Einsatz von Laserstrahlen zur Entschärfung von Munition durch Zerstörung des Initialsprengstoffes des Zünders des Sprengkopfes jedoch nicht der Einsatz von Laserstrahlen bei im Erdreich vergrabenen Landminen zu deren Neutralisation bekannt. Mit dem bekannten Verfahren soll lediglich Munition entschärft werden, und zwar ausschließlich durch Zerstörung des Initialsprengstoffes des Zünders des Sprengkopfes; die Munition selbst soll nicht zerstört werden. Um dies zu erreichen, bedarf es der Einhaltung ganz besonderer Massnahmen, nämlich insofern, als die zu entschärfende Munition so zur Laufrichtung des Laserstrahls angeordnet sein muß, daß der Laserstrahl quer durch die Struktur des Geschoßkopfes läuft, d.h. es wird ein fokussierter Laserstrahl nur auf den Zünder der Munition gerichtet und hierbei werden lediglich die bei der Laser-Metallbearbeitung bekannten Erkenntnisse angewandt, nämlich insofern, als der Laserstrahl auf den aus metallischen Werkstoffen bestehenden Zünder gerichtet wird, so daß die Laserstrahlung vom Zünderkopf absorbiert und die dabei entstehende Wärme als Prozeßwärme eingesetzt wird, vermittels der der Zünderkopf zerstört und der Sprengstoff im Zünder zur Zündung gebracht wird, wobei u.a. auch zur Leitung der erzeugten Wärme die Materialeigenschaften und somit die Wärmeleitfähigkeit des Materials des Zünders ausgenutzt wird. Es werden dabei Temperaturen erreicht, die ausreichen, um den Sprengstoff des Zünders zum Verbrennen zu bringen, wodurch der Zünder zerstört wird. Die bei der Zerstörung von metallischen Werkstoffen vermittels eines Laserstrahls bekannten Erkenntnisse sind jedoch nicht ohne weiteres übertragbar für das Neutralisieren von durch eine Erdschicht geschützten Minen, da die Laserstrahlung vom Erdreich nicht absorbiert und die dabei entstehende Wärme nicht als Prozeßwärme eingesetzt werden kann.

Die Erfindung löst die Aufgabe, ein Verfahren und ein mobiles Gerät zur Neutralisation von oberflächenmäßig im Erdreich verlegten oder getarnten Landminen der eingangs genannten Art zu schaffen, das funktionssicher ist, mit geringen Betriebskosten verbunden ist, die Neutralisation von sogenannten intelligenten Landminen ermöglicht und keine zusätzlichen logistischen Probleme mit sich bringt sowie Konzepte zur Wiederaufnahme/Beseitigung von der eigenen Einheit verlegter Minen unterstützt bei gleichzeitiger Erhöhung der Räumleistung.

Diese Aufgabe wird durch die im Patentanspruch 1 gekennzeichneten Merkmale gelöst.

Des weiteren wird die Aufgabe durch ein mobiles Gerät mit den im Patentanspruch 3 angegebenen Merkmalen gelöst, wobei der Oberbegriff dieses Anspruches bekannt ist, beispielsweise durch die DE-A 2 121 089.

Mit einem derartigen Verfahren und dem hierzu ausgebildeten mobilen Gerät ist ein Minenräumsystem geschaffen, mit dem auch intelligente Landminen neutralisierbar sind. Das mobile Trägersystem, ausgerüstet mit computergesteuerten Manipulatoren/Robotern, die den fokussierten Strahl eines auf dem gleichen Trägersystem installierten, leistungsstarken Laser-Aggregats systematisch über die zu räumende Fläche führen (SCAN-Verfahren), ist geeignet, Minen aus ausreichendem Sicherheitsabstand unschädlich zu machen. Aufgrund des überraschend aufgefundenen Eindringvermögens eines Laserstrahls in das Erdmaterial ist es auch möglich, im Erdreich vergrabene Landminen zu neutralisieren. Ferner ist auch das Aktivieren von Sprengmaterial mit dem Ziel möglich, dieses abbrennen zu lassen oder kontrolliert zur Detonation zu bringen. Durch systematisches Beschießen mit einem Laserstrahl der von Minen zu räumenden Fläche in einem entsprechenden Raster ist es möglich, auf funktionssichere und kostengünstige Weise eine befahrbare Gasse in einem Minenfeld herzustellen.

Neben der Aufgabe, eine unbekannte, verminte Schneise in einem Minenfeld zu räumen, kann es auch erforderlich sein, von der eigenen Einheit verminte Gebiete wieder zu durchqueren. In Verbindung mit einer dokumentierten Minen-Verlegeprozedur, und zwar für den Bereich einer potentiellen Schneise, bietet das Räumsystem die Option, gezielt durch Rechner unterstützt die verlegten Minen anzusteuern und zur Detonation zu bringen. Eine derartige Verfahrensweise steigert die Räumleistung im Vergleich zum SCAN-Verfahren erheblich.

Hinzu kommt als weiterer Vorteil, daß mit einem fokussierten Laserstrahl in Überdeckungen aus Erdmaterial mehrere Zentimeter tief eingedrungen werden kann, so daß auch mit Erdmaterial überdeckte Minen neutralisierbar sind. Mit Erdmaterial überdeckte Minen stellen somit für den Laserstrahl überraschenderweise kein unüberwindbares Hindernis dar.

Das Verfahren unter Verwendung eines Laserstrahles ist auch bei solchen Minenfeldern anwendbar, bei denen je zwei Minen übereinanderliegend im Erdreich vergraben sind. Um derartige Minen neutralisieren zu können, wird der fokussierte Laserstrahl nach Auftreffen auf eine Mine und nach deren Detonation in einer vorgegebenen Zeiteinheit im Detonationsbereich verweilend gehalten, um eine evtl. im Detonationsbereich noch vorhandene Mine neutralisieren zu können.

Besonders vorteilhaft hat sich für die Anwendung des Verfahrens ein $CO_2$-Gaslaser mit mehreren kW Dauerstrich-Leistung oder ein gepulster Neodym-Yag-Laser geeignet, jedoch auch andere Leistungsstarke Laser-Aggregate können zur Anwendung gelangen.

Vorteilhafte Ausgestaltungen der Erfindung sind in den Unteransprüchen gekennzeichnet.

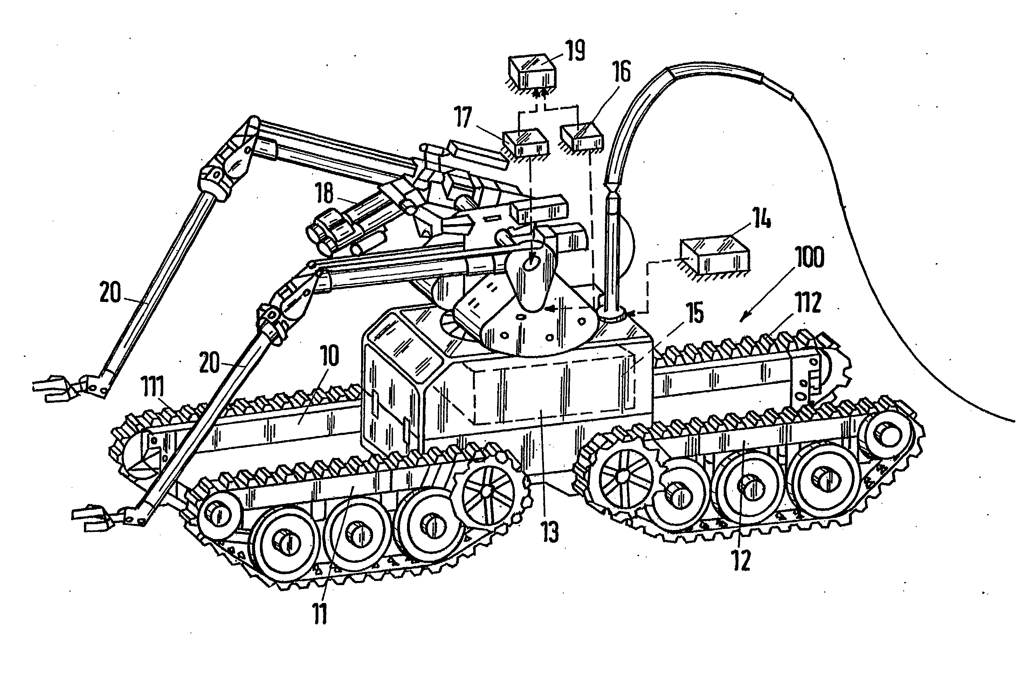

Ein Ausführungsbeispiel der Erfindung wird nachstehend anhand der Zeichnung näher erläutert, die in einer schaubildlichen Ansicht ein mobiles Gerät zur Neutralisation von Landminen zeigt.

Dieses mobile Gerät 100 besteht aus einem rahmenartigen Fahrgestell 10, welches bei dem in der Zeichnung dargestellten Ausführungsbeispiel auf jeder Seite zwei in Reihe hintereinanderliegend angeordnete Kettenlaufwerke 11, 12, 111, 112 aufweist, die mittels einer Antriebseinrichtung antreibbar sind, die in einem in dem Fahrgestell 10 mittig vorgesehenen Gerätegehäuse 13 angeordnet ist. Diese Antriebseinrichtung 21 kann, wenn das Gerätegehäuse zur Aufnahme von Bedienungspersonen ausgebildet ist, von Hand bedient werden. Jedoch besteht auch die Möglichkeit, das mobile unbemannte Gerät durch Impulse fernzulenken, die von einem Fernlenkstand ausgehen und mechanisch, elektromagnetisch, fiberoptisch oder akustisch übertragen werden. In dem zu lenkenden mobilen Gerät 100 werden dann die empfangenen Impulse zur Änderung der Stellung von Lenkeinrichtungen benutzt, wobei eine Kommandolenkung oder Leitstrahlverfahren angewendet werden können. Eine derartige Fernlenksteuereinrichtung ist bei 14 in dem mobilen Gerät angedeutet.

Das mobile Gerät 100 ist mit einer Laser-Erzeugungseinrichtung 15 versehen, die in dem Gerätegehäuse 13 oder auf dem Gerätegehäuse angeordnet sein kann. Bei 18 ist ein Laserstrahlaustrittsrohr angedeutet, welches in der Höhe und in der Seite mittels bei 16, 17 angedeuteter Stellmotoren verschwenkbar und gegebenenfalls teleskopisch verschiebbar ist, wobei diese Verschwenkbarkeit programmgesteuert sein kann. Ein entsprechendes Programmsteuerwerk ist bei 19 angedeutet. Mit 20 sind zusätzliche Greifarme bei dem Gerät 100 angedeutet.

Vermittels des Programmsteuerwerkes 19 und der Stellmotoren 16, 17 besteht die Möglichkeit, den Bewegungsablauf des fokussierten Strahles programmgesteuert über die zu räumende Fläche zu führen, wobei der durch Rechner unterstützte fokussierte Laserstrahl die verlegten Minen ansteuert und diese zur Detonation bringt. Das Räumen eines Feldes erfolgt in einem vorgegebenen Raster, so daß der Laserstrahl über alle Abschnitte des zu räumenden Feldes geführt wird, wobei das mobile Gerät 100 während des Räumvorganges keine Vorwärtsbewegung durchführt, während bei einer weiteren Räummöglichkeit auch die Vorwärtsbewegung des Gerätes 100 mit in das Führen des Laserstrahles über die von Minen zu räumende Fläche mit einbezogen werden kann.

Neben der Verwendung eines kontinuierlichen Laserstrahles während des Räumvorganges besteht auch die Möglichkeit, den Laserstrahl blitzartig auszusenden, ohne daß dadurch die Räumsicherheit verringert wird.

**Patentansprüche**

1. Verfahren zur Neutralisation von oberflächenmäßig im Erdreich verlegten oder getarnten Landminen mittels eines über die von Landminen zu räumende Fläche zur Schaffung einer minenfreien Gasse geführten Strahles, dadurch gekennzeichnet, daß ein fokussierter Strahl eines leistungsstarken Laser-Aggregats verwendet und selbsttätig mittels computergesteuerter Manipulatoren/Roboter oder von Hand systematisch in einem Raster über die von Landminen zu räumende Fläche geführt wird, wobei der Bewegungsablauf des fokussierten Strahles programmgesteuert wird und der fokussierte Strahl durch Rechner unterstützt sowohl systematisch im SCAN-Verfahren als auch gezielt die verlegten Minen ansteuert und der Laserstrahl nach erfolgter Detonation einer Mine in einer vorgegebenen Zeiteinheit im Detonationsbereich verweilend gehalten wird, wobei als Laserstrahl vorzugsweise ein $CO_2$-Gaslaser mit mehreren kW Dauerstrich-Leistung oder ein gepulster Neodym-YAG-Laser verwendet wird.

2. Verfahren nach Anspruch 1, dadurch gekennzeichnet, daß der Laserstrahl beim Führen über die von Landminen zu räumende Fläche in vorgegebenen Zeitintervallen in Form von Laserstrahlblitzen ausgesandt wird.

3. Mobiles Gerät aus einem rahmenartigen Fahrgestell (10) mit mindestens einem auf jeder Seite des Fahrgestells angeordneten Kettenlaufwerk (11, 12; 111, 112) und mit einem mittig in dem Fahrgestellraum angeordneten Gerätegehäuse (13), in dem über eine Fernlenkeinrichtung (14) oder von Hand steuerbare Antriebseinrichtung (21) für die Kettenlaufwerke (11, 12, 111, 112) angeordnet sind, zur Durchführung des Verfahrens nach Anspruch 1 und 2, dadurch gekennzeichnet, daß in dem Gerätegehäuse (13) eine Laserstrahlerzeugungseinrichtung (15), wie $CO_2$-Glaslaser mit mehreren kW Dauerstrich-Leistung oder gepulster Neodym-YAG-Lasern angeordnet ist, wobei auf dem Gerätegehäuse (13) ein um eine senkrechte und eine waagrechte Achse mittels programmgesteuerter (19) Stellmotoren (16, 17) höhen- und seitenverstellbares Laserstrahlaustrittsrohr (18) zum systematischen Führen des Laserstrahls über die von Landminen zu räumende Fläche angeordnet ist.

**Claims**

1. A method for neutralizing landmines laid or concealed in the surface of the soil by means of a beam guided across the area to be cleared of landmines in order to provide a lane free of mines, characterized in that a focussed beam of a powerful laser unit is employed and automatically guided with the aid of computer-controlled manipulators/robots or systematically by hand within a grid across the area to be cleared of landmines, wherein the course of movement of the focussed beam is programme-controlled and the focussed beam, supported by computers as well as systematically in the SCAN process and also specifically, triggers the laid mines and, subsequent to the effected detonation of a mine, is made to remain within a predetermined unit of time within the area of detonation, in which by preference a $CO_2$ gas laser possessing a continuous wave power of several kW or a pulsed neodymium YAG laser is used as laser beam.

2. A method according to Claim 1, characterized in that the laser beam, wehn guided across the area to be cleared of landmines, is emitted at preset time intervals in the form of laser beam flashes.

3. A mobile unit comprising a frame-like chassis (10) with at least one chain drive propelling mechanism (11, 12; 111, 112) disposed on each side of the chassis and with an equipment housing (13) arranged centrally within the chassis space, in which is mounted a drive means (21) controllable via a remote control device (14) or manually controllable for the chain drive propelling mechanisms (11, 12, 111, 112), for carrying out the method according to Claims 1 and 2, characterized in that, inside the equipment housing (13), a laser beam generating means (15) is disposed for generating laser beams such as $CO_2$ gas lasers possessing a continuous wave power of several kW or pulsed neodymium YAG lasers, wherein on the equipment housing (13), there is mounted a laser beam emission tube (18) which is vertically and laterally adjustable around a vertical and a horizontal axis by means of programme-controlled (19) servomotors (16, 17) for systematically guiding the laser beam across the area to be cleared of landmines.

**Revendications**

1. Procédé de déminage pour mines terrestres enterrées en surface ou camouflées au moyen d'un rayon dirigé sur la surface à débarrasser des mines terrestres pour créer une voie sans mines, caractérisé en ce que l'on utilise un rayon focalisé d'un agrégat à laser de grande puissance qui est dirigé dans une trame au-dessus de la surface à débarrasser des mines terrestres de manière automatique par des manipulateurs/robots commandés par ordinateur ou systématiquement à la main, le déroulement du déplacement du rayon focalisé étant commandé par un programme et le rayon focalisé, assisté par ordinateur, se dirigeant sur les mines posées aussi bien systématiquement par scanning que de manière visée, le rayon laser étant maintenu momentanément dans la zone de détonation dans une unité de temps prédéfine, après que la détonation d'une mine ait eu lieu, le rayon laser utilisé étant de préférence un laser à gaz ou CO₂ avec un rendement en régime continu de plusieurs kW ou un laser YAG au néodyme en régime pulsé.

2. Procédé selon la revendication 1, caractérisé en ce que le rayon laser, qui est dirigé sur la surface à débarrasser de mines terrestres, est émis sous forme d'éclairs de rayon laser à des intervalles de temps prédéfinis.

3. Dispositif mobile se composant d'un châssis (10) du type cadre avec au moins un mécanisme de roulement à chenilles (11, 12; 111, 112) disposé sur chaque côté du châssis et avec une carcasse d'appareils (13) placée au milieu de l'espace du châssis, dans laquelle est placé un dispositif de commande (21) pour les mécanismes de roulement à chenilles (11, 12, 111, 112) qui peut être commandé par un dispositif de télécommande (14) ou à la main, pour la mise en œuvre du procédé selon les revendications 1 et 2, caractérisé en ce qu'un dispositif de génération de rayon laser (15) tel que laser à gaz au CO₂ avec un rendement en régime continu de plusieurs kW ou laser YAG au néodyme en régime pulsé est placé dans la carcasse d'appareils (13), un tuyau de sortie du rayon laser (18) réglable en hauteur et latéralement autour d'un axe vertical et d'un axe horizontal au moyen de moteurs de commande (16, 17) commandés par ordinateur (19) étant placé sur la carcasse d'appareils (13) pour diriger systématiquement le rayon laser sur la surface à débarrasser de mines terrestres.